(19) Europäisches Patentamt / European Patent Office / Office européen des brevets

(11) **EP 4 508 637 B1**

(12) **EUROPEAN PATENT SPECIFICATION**

(45) Date of publication and mention
of the grant of the patent:
**15.07.2026 Bulletin 2026/29**

(21) Application number: **23718292.8**

(22) Date of filing: **14.04.2023**

(51) International Patent Classification (IPC):
**G10L 21/0388** *(2013.01)* **G06N 3/0475** *(2023.01)*
**G06N 3/0442** *(2023.01)* **G06N 3/0464** *(2023.01)*
**G06N 3/08** *(2023.01)*

(52) Cooperative Patent Classification (CPC):
**G10L 21/0388; G06N 3/0475; G06N 3/0442;**
**G06N 3/0464; G06N 3/08**

(86) International application number:
**PCT/EP2023/059843**

(87) International publication number:
**WO 2023/198925 (19.10.2023 Gazette 2023/42)**

(54) **HIGH FREQUENCY RECONSTRUCTION USING NEURAL NETWORK SYSTEM**

HOCHFREQUENZREKONSTRUKTION UNTER VERWENDUNG EINES NEURONALEN
NETZWERKSYSTEMS

RECONSTRUCTION DE HAUTES FRÉQUENCES À L'AIDE D'UN SYSTÈME DE RÉSEAU
NEURONAL

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **14.04.2022 EP 22168469**
**14.04.2022 US 202263331056 P**

(43) Date of publication of application:
**19.02.2025 Bulletin 2025/08**

(73) Proprietor: **Dolby International AB**
**Dublin, D02 VK60 (IE)**

(72) Inventors:
• **EKSTRAND, Per**
**San Francisco, California 94103 (US)**
• **KJÖRLING, Kristofer**
**San Francisco, California 94103 (US)**
• **KLEJSA, Janusz**
**San Francisco, California 94103 (US)**

(74) Representative: **Dolby International AB**
**Patent Group Europe**
**77 Sir John Rogerson's Quay**
**Block C**
**Grand Canal Docklands**
**Dublin, D02 VK60 (IE)**

(56) References cited:
EP-A1- 3 920 182        WO-A1-2020/221846
WO-A1-2021/179788        KR-A- 20200 128 684

• HUANG QINGBO ET AL: "Bandwidth Extension
Method Based on Generative Adversarial Nets
for Audio Compression", AES CONVENTION
144; MAY 2018, AES, 60 EAST 42ND STREET,
ROOM 2520 NEW YORK 10165-2520, USA, 14
May 2018 (2018-05-14), XP040698817

**Description**

CROSS REFERENCE TO RELATED APPLICATIONS

This application claims priority from U.S. Provisional Application No. 63/331,056 (reference: D21075USP1) filed 14 April 2022 and European Application No. EP22168469.9 (reference: D21075EP), filed 14 April 2022.

TECHNICAL FIELD OF THE INVENTION

The present invention relates to high frequency reconstruction using a generative deep neural network operating in a filter bank domain.

BACKGROUND OF THE INVENTION

For very low bitrate audio coding systems, existing encoders for audio transmission are unable to encode signals of full bandwidth, thus being forced to encode only a lower frequency range. For example, for 32 kbps stereo, encoded by e.g. mp3 (ISO/MPEG-II layer 3), the codec bandwidth may be as low as 4-6 kHz. While this for some use cases may be sufficient, it is generally desired to convey also higher frequencies in the audio output.

According to one approach, referred to as "blind bandwidth extension", higher frequency bands are generated based only on the information in the lower frequency bands. Such processing schemes can successfully provide bandwidth extension for specific isolated signal classes, e.g., speech and piano music, where the signal statistics are well determined, but fail for more complex signal types (e.g., general audio containing mixed music and speech or other signal classes).

In a more elaborate approach, referred to as "high frequency reconstruction" (HFR), side information that describes properties of the higher frequency (HFR) bands, e.g., the spectral envelope, the tonal to noise ratio, or other characteristics of the high-band is used to reconstruct the HFR bands. Such high frequency reconstruction, guided by side information, is known to work well for most signal classes. Examples include A-SPX in AC-4 (developed by Dolby Laboratories) and SBR in HE-AAC (an ISO/MPEG standard).

In such HFR systems, the coded bitstream includes a low frequency band which is waveform-coded, and HFR side information parametrizing the HFR band. Only a fraction of the available bitrate is allocated to the HFR side information. The frequency where the HFR range starts is referred to as the "cross-over" frequency. On the decoder side, the low-band is decoded by a decoder, and the HFR side information is used by an HFR module to reconstruct the HFR band correctly.

In the HFR module, a unit referred to as a "transposer" first generates an initial high-band approximation. This approximation is then modified in various ways to resemble the original high-band, in a process guided by the side information in the bitstream. One method of transposition is the "copy-up" method (e.g. used in AC-4 and HE-AAC), where frequency chunks (a contiguous set of sub band samples) from the decoded low-band is copied to the HFR frequency range. While this is a robust method of extremely low computational complexity, it often suffers from single sideband (SSB) distortion when the cross-over frequency is low. Usually this is the case when coding for low bitrates, since the available bits only allow a limited frequency range to be encoded by the waveform core encoder. Another method of transposition is the harmonic transposer used in e.g., the MPEG USAC standard, where a phase vocoder is used to generate harmonics of 2nd, 3rd and even 4th order from the low-band. While this type of transposition avoids SSB distortion, the generated high-band is sometimes perceived as metallic and synthetic. In another example, a HFR system using generative adversarial nets and side information is described in HUANG QINGBO ET AL: "Bandwidth Extension Method Based on Generative Adversarial Nets for Audio Compression", AES CONVENTION 144; MAY 2018, AES, 60 EAST 42ND STREET, ROOM 2520 NEW YORK 10165-2520, USA, 14 May 2018 (2018-05-14), XP040698817.

GENERAL DISCLOSURE OF THE INVENTION

The invention is as defined in appended independent claims 1, 9 and 14. Preferred embodiments are set forth in the dependent claims.

BRIEF DESCRIPTION OF THE DRAWINGS

The present invention will be described in more detail with reference to the appended drawings, showing currently preferred embodiments of the invention.

Figure 1 is a process diagram of a decoder system according to a first embodiment of the present invention.
Figure 2 is a schematic topology of the generative model in figure 1 according to one implementation.
Figure 3 shows training of the model in figure 2.
Figure 4 is a process diagram of a decoder system according to a second embodiment of the present invention.
Figure 5 is a schematic topology of the generative model in figure 4 according to one implementation.
Figure 6 is a process diagram of a decoder system according to a third embodiment of the present invention.

DETAILED DESCRIPTION OF CURRENTLY PREFERRED EMBODIMENTS

Systems and methods disclosed in the present application may be implemented as software, firmware, hardware, or a combination thereof. In a hardware implementation, the division of tasks does not necessarily correspond to the division into physical units; to the contrary, one physical component may have multiple functionalities, and one task may be carried out by several physical components in cooperation.

The computer hardware may for example be a server computer, a client computer, a personal computer (PC), a tablet PC, a set-top box (STB), a personal digital assistant (PDA), a cellular telephone, a smartphone, a web appliance, a network router, switch or bridge, or any machine capable of executing instructions (sequential or otherwise) that specify actions to be taken by that computer hardware. Further, the present disclosure shall relate to any collection of computer hardware that individually or jointly execute instructions to perform any one or more of the concepts discussed herein.

Certain or all components may be implemented by one or more processors that accept computer-readable (also called machine-readable) code containing a set of instructions that when executed by one or more of the processors carry out at least one of the methods described herein. Any processor capable of executing a set of instructions (sequential or otherwise) that specify actions to be taken are included. Thus, one example is a typical processing system (i.e. a computer hardware) that includes one or more processors. Each processor may include one or more of a CPU, a graphics processing unit, and a programmable DSP unit. The processing system further may include a memory subsystem including a hard drive, SSD, RAM and/or ROM. A bus subsystem may be included for communicating between the components. The software may reside in the memory subsystem and/or within the processor during execution thereof by the computer system.

The one or more processors may operate as a standalone device or may be connected, e.g., networked to other processor(s). Such a network may be built on various different network protocols, and may be the Internet, a Wide Area Network (WAN), a Local Area Network (LAN), or any combination thereof.

The software may be distributed on computer readable media, which may comprise computer storage media (or non-transitory media) and communication media (or transitory media). As is well known to a person skilled in the art, the term computer storage media includes both volatile and non-volatile, removable and non-removable media implemented in any method or technology for storage of information such as computer readable instructions, data structures, program modules or other data. Computer storage media includes, but is not limited to, physical (non-transitory) storage media in various forms, such as EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information, and which can be accessed by a computer. Further, it is well known to the skilled person that communication media (transitory) typically embodies computer readable instructions, data structures, program modules or other data in a modulated data signal such as a carrier wave or other transport mechanism and includes any information delivery media.

In the following description, the neural network systems are said to generate a current sample of the audio signal representation. In reality, the neural network system would typically generate a probability distribution. The reconstruction of a sample would happen by means of sampling according to the probability distribution.

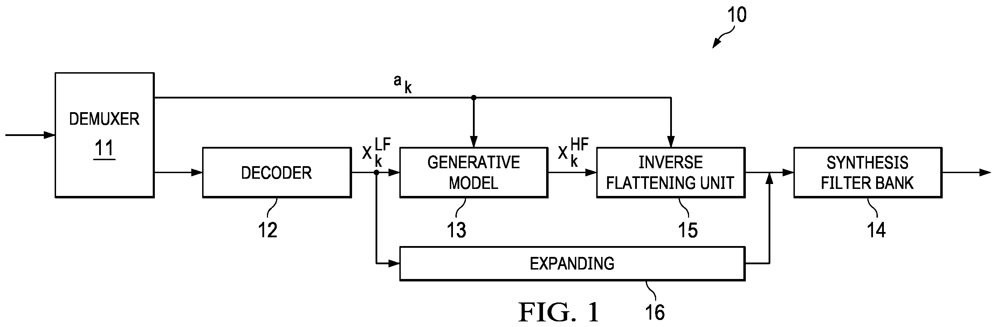

Figure 1 shows a decoder system 10 including a bitstream demuxer 11 configured to receive a bitstream, e.g. an AC-4 bitstream, and separate it into a low-band audio signal representation and side information, including high frequency reconstruction parameters $a_k$. A decoder 12 is configured to decode the low-band audio signal representation into a series of low-band filter bank domain samples, each sample $x_k^{LF}$ containing a plurality of values corresponding to filter bank channels in a low-band frequency range. The decoder system further includes an autoregressive generative model in the form of a neural network system 13, configured to perform high frequency reconstruction by predicting high-band samples $x_k^{HF}$ given the low-band samples $x_k^{LF}$ and the high frequency reconstruction parameters $a_k$. A synthesis filter bank 14 is configured to generate a combined audio signal in the time domain, based on the low-band filter bank samples and the predicted high-band samples.

In one example, the synthesis filter bank 14 is a Quadrature Mirror Filter (QMF) bank, and the neural network system 13 is trained to output high-band QMF samples (or, strictly speaking, probability distributions of such samples). The decoder 12, in turn, is configured to decode the bitstream into low-band QMF samples. In many applications, the bitstream includes encoded MDCT samples, in which case the decoder 12 will first decode the MDCT samples, inverse transform these samples into the time domain, and finally apply a QMF analysis filter bank to obtain the QMF samples.

In use, the decoder system 10 will receive a bitstream which will be split by the demuxer 11 into a low-band audio signal representation and high frequency reconstruction parameters $a_k$. The low-band audio signal representation is decoded by decoder 12. The low-band samples $x_k^{LF}$, here QMF samples, are provided to the generative model 13, which predicts high-band samples $x_k^{HF}$ using the high frequency reconstruction parameters $a_n$ as additional conditioning. The resulting filter bank samples (decoded low-band and generated high-band) are subsequently synthesized by the synthesis filter bank 14 to a time-domain (e.g. PCM) signal.

One example of a neural network based generative model operating in the filter bank (QMF) domain is disclosed in PCT/EP2021/078652. This model processes QMF samples end-to-end, i.e., it takes QMF subband samples as ground truth input during training and generates QMF samples during inference (generation). The neural network system in PCT/EP2021/078652 is a modification of previously disclosed time domain generative models and serves to facilitate the prediction of filter bank domain samples. The model uses upper tiers, with a coarser time resolution, that condition a bottom tier, with finer time resolution. This bottom tier (Tier 0) is made up of several layers, each predicting a subset of the filter bank channels. Subsequent layers are conditioned by preceding layers by a Recurrent Neural Network (RNN).

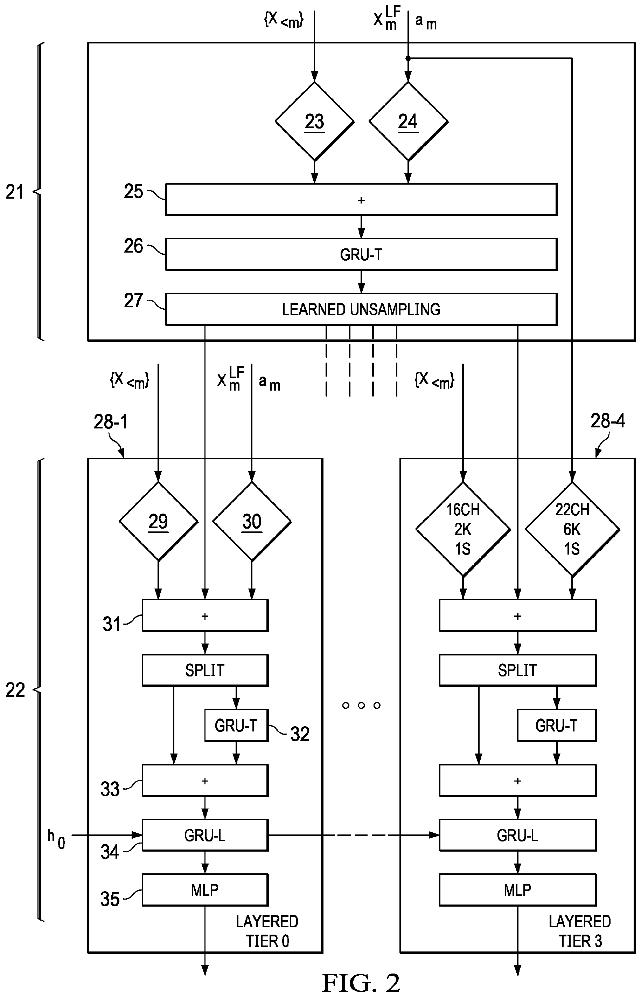

An example of a neural network system 13 following this approach is shown in more detail in figure 2. Here, the model 13 includes a (single) upper tier 21 and a bottom tier 22. In the upper tier 21, previously generated filter-bank samples are received together with the decoded low-band samples and the high frequency reconstruction parameters.

The upper tier 21 includes a convolutional network 23 which takes as its input a set of previously generated samples $\{x_{<m}\}$ (i.e. generated before the current time slot $m$). The convolutional network 23 may e.g., include 32 channels and use a kernel size of 15. The upper tier 21 further includes another convolutional network 24, which takes as its input the decoded low-band samples $x_m^{LF}$ and the high frequency reconstruction parameters $a_m$ for the current time slot $m$ (and possibly also for future time slots > $m$). The convolutional network 24 may for example include 22 channels. It is noted that the exact kernel sizes and strides of the convolutional networks 23, 24 may be adjusted based on a plurality of factors, including e.g. the provided frame size of e.g. the previous samples $\{x_{<m}\}$, the time resolution(s) of the high frequency reconstruction parameters $a_m$.

The output of the convolutional networks 23, 24 are added in summation point 25, and input to a recurrent neural network (RNN) 26. The RNN 26 may for example be implemented using one or more stateful network units, for example, gated recurrent units (GRUs), long short-term memory units (LSTMs), Quasi-Recurrent Neural Networks, Elman networks, or similar. A main property of such an RNN is that it is stateful, i.e. it updates its hidden, latent state over time steps.

The output from the RNN 26 is provided as input to an upsampling stage 27, which may for example be implemented using a transposed convolutional network. It is envisaged that the network may itself learn exactly how to perform such an upsampling, i.e. the upsampling provided by the stage 27 may be a "learned upsampling".

The bottom tier 22 is divided into a plurality of sequentially executed sub-layers 28-j (where j = 1, ..., L, and where L is the total number of sub-layers, in this case four). Each sub-layer is configured to generate a set of channels of the reconstructed high frequency band.

Each sub-layer 28-j includes a convolutional network 29 which takes as its input the set of previously generated samples $\{x_{<m}\}$, The convolutional networks 29 can have different number of channels. All convolutional networks may have the same kernel size, e.g. 4. Each sub-layer 28 further includes another convolutional network 30, which takes as its input decoded low-band samples $x_m^{LF}$ and the high frequency reconstruction parameters $a_m$ for the current time slot $m$ (and possibly also future time slots). The convolutional networks 30 may correspond to the convolutional networks 24 in the upper tier 21.

The output of the convolutional networks 29, 30 and the output from the upper tier 21 are all added in summation point 31 and then split, to form two different tensors of equal size. One of the tensors is input to a recurrent neural network (RNN) 32, e.g. another GRU. This RNN 32 may be similar in structure as the RNN 26. The output of the RNN 32 and the second tensor from the split are added in a second summation point 33, and fed to a further RNN 34, e.g. another GRU, which is common for all layers. In contrast to the RNNs 32, which operate in a "time direction", the RNN 34 operates in a "layer direction", or "frequency band direction". The RNN 34 may therefore predict samples for higher filter-bank channels from lower filter-bank channels. The RNN 34 is provided with conditioning in the form of parameters *ho,* which becomes the initial hidden states of RNN 34. The parameters *ho* may be learned parameters, i.e. trained by the neural network, or set to constant values, e.g., zeros.

The output from the RNN 34 is finally provided as conditioning to a neural network 35, e.g. a multilayer perceptron MLP, which outputs a set of channels of the high-band of the current QMF sample. As mentioned above, in an actual implementation the outputs from 35 are parameters, e.g. mean and variance, for the selected distribution: e.g. Gaussian, Logistic or Laplacian. During generation (inference), the filter bank samples are sampled from the distribution, given these parameters.

Processing occurs first in sub-layer 28-1, followed by the next sub-layer and so on until and including processing in the last sub-layer, in this case 28-4. Each layer will have access also to channels that have been generated for the current time slot m, and the kernels of the respective convolutional networks 29 are "masked" accordingly in order to allow each sub-layer to compute a single or a few of the total number of channels. As an example, with L=4 sub-layers, ten frequency channels in the decoded low-band and 22 frequency channels in the reconstructed high-band, the first two layers 28-1, 28-2 may generate four high-band channels each, the third layer 28-3 may generate six high-band channels, and the fourth layer 28-4 may generate eight high-band channels. In realistic implementations, the number of layers is usually larger.

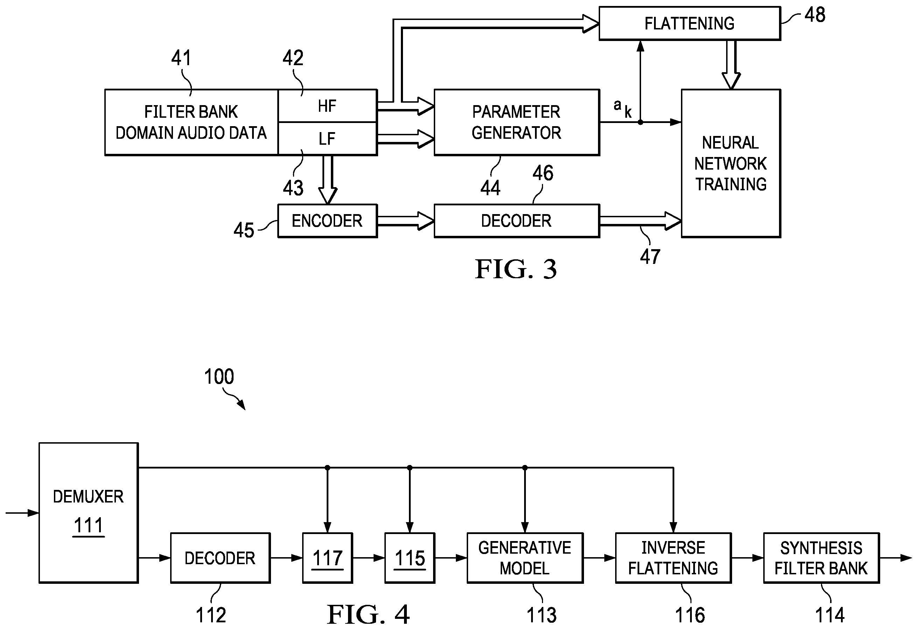

Training of the neural network system (generative model) 13 is illustrated in figure 3. Ground truth data in the form of filter bank domain audio data 41, e.g. QMF samples, including high-band samples 42 and low-band samples 43, is supplied to a parameter generator 44 configured to provide high frequency reconstruction parameters $a_k$. This parameter generator 44 would typically form part of the encoder in a codec system. The low-band samples 43 are also supplied to an encoder/decoder 45, 46, to provide a decoded version 47 of the low-band samples. The neural network system 13 is trained using the high-band samples 42 as ground truth, and the high frequency reconstruction parameters $a_k$ and decoded low-band 47 as conditioning.

In figure 3, the ground truth high-band samples 42 are flattened 48 using the transmitted spectral envelope in the high frequency reconstruction parameters. The flattening applies the inverse gains calculated from the envelope energies to decrease the dynamics of, or whiten, the high-band QMF samples. In one embodiment, the high-band samples 42 are not "fully" flattened, instead using a compression factor of approximately 0.9 instead of 1.0 (where 1.0 would correspond to full flattening towards unit variance for each band).

Returning to figure 1, the decoder system 10 in this case further includes an inverse flattening unit 15 for inverse flattening the predicted high-band samples. As explained below, the model 13 is trained to predict samples in the flattened QMF domain. The inverse flattening unit 15 is configured to apply inverse flattening using the spectral envelope information in the side information.

Instead of "direct" inverse flattening before the QMF synthesis, i.e., applying exactly the inverse of the gains applied during flattening of the ground truth input, a further envelope adjustment could also be applied by the inverse flattening unit 15 to the flattened output QMF samples, where the adjustment would aim at making sure that the envelope of the reconstructed signal follows exactly the envelope information transmitted in the bitstream. The upside with this approach is that since the envelope data is based on absolute values, the envelope adjuster would act as a safety guard ensuring that the spectral envelope is always correct (within the accuracy of the spectral envelope values estimated by the high frequency reconstruction parameter generator 44).

Finally, the decoder system 10 may include an expanding unit 16 for removing any compression applied during the encoding of the low-band samples $x_k^{LF}$.

The decoder system 100 in figure 4 includes, similar to the decoder system 10, a demuxer 111, a decoder 112, a generative model in the form of a neural network system 113 and a synthesis filter bank 114, e.g. a QMF filter bank. Also in this case, the decoder system 100 will receive a bitstream which is split by the demuxer 111 into a low-band audio signal representation and high frequency reconstruction parameters $a_k$. The low-band audio signal representation is decoded by decoder 112.

In this implementation, however, the neural network system 113 is trained to predict not only the high-band samples, $x_k^{HF}$, but also the low-band samples, $\hat{x}_k^{LF}$, given the decoded low-band samples $x_k^{LF}$ and the high frequency reconstruction parameters. The synthesis filter bank 114 will in this case generate a combined audio signal in the time domain based only on the generated (predicted) filter bank samples (low-band and high-band).

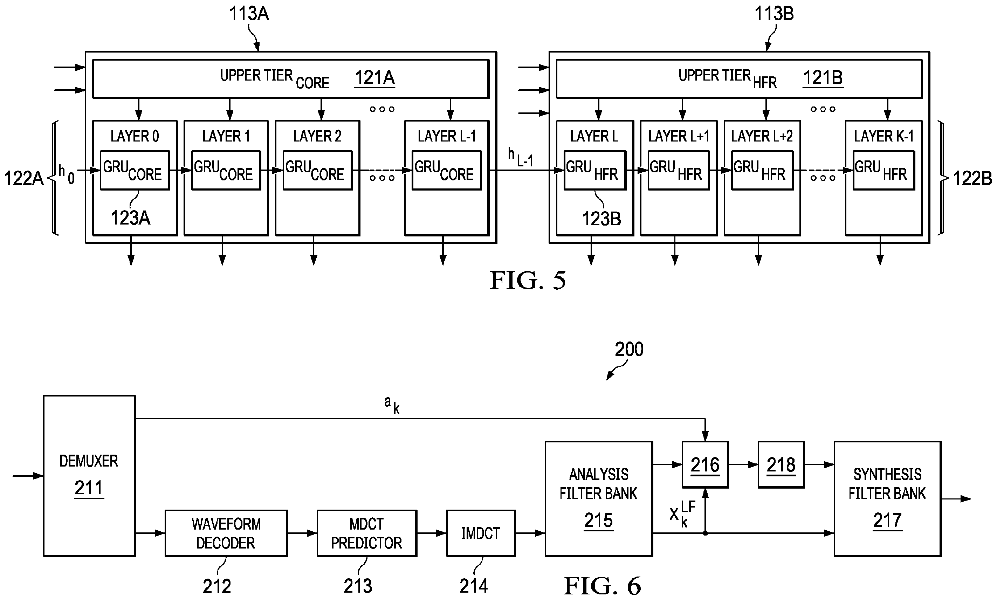

The neural network system 113 will be further described with reference to figure 5. In this case, the system 113 is separated into two submodels 113A and 113B. The first submodel is trained to predict low-band samples (in a plurality of channels), given previously generated samples and the decoded low-band samples. The second submodel is trained to predict high-band samples (in a plurality of channels), given previously generated samples, the decoded low-band samples, and the high frequency reconstruction parameters.

Each submodel 113A, 113B includes an upper tier 121A, 121B and a bottom tier 122A, 122B. The bottom tier 122A of the first submodel 113A includes a first group of layers that predict the low-band range, while the bottom tier 122B of the second submodel 113B includes a second group of layers that will predict the high-band range, as discussed above. It is important to note that the RNN 123A in the bottom tier 122A and the RNN 123B in the bottom tier 122B may not be the same in the two submodels. They may each have a separate set of coefficients (weights) determined during training for their specific purpose.

During training of this model (neural network system 113) also the ground truth low-band samples may be flattened, in which case a spectral envelope for the low-band range is calculated and given the time resolution of the spectral envelopes for the high-band. Both spectral envelopes are concatenated and used in the conditioning.

In this case, the decoded filter bank samples need to be flattened before being provided to the neural network system 113 using the same type of spectral envelope as used to flatten the ground truth samples during training. For this purpose, the decoder system 100 may include a flattening unit 115, arranged preceding the neural network 113. Further, both low-band range and high-band range predicted by the model 113 will be flattened. The decoder 100 may therefore also include an inverse flattening unit 116 arranged between the neural network system 113 and the synthesis filter bank 114. The inverse flattening unit 116 is configured to inverse flatten and optionally also envelope adjust, both low-band and high-band samples generated by the neural network system 113.

Further, similar to the decoder system 10, any compression applied during the encoding of the low-band samples will need to be removed. For this purpose, the flattening unit 115 may be preceded by an expanding unit 117, similar to unit 16 in figure 1.

With the implementation in figure 4, the model (neural network system) 113 is capable also of reconstructing missing samples. In other words, given appropriate training, the decoder system 100 will be capable of increasing the quality of reconstruction of coarsely quantized filter bank samples given appropriate side information (decoded low-band samples from the decoder and high frequency reconstruction parameters from the bitstream).

Figure 6 shows a decoder system 200 having similar capabilities as the decoder system 100, but operating in two different filter bank domains, in the illustrated case the MDCT and QMF domains.

Also in this case, the bitstream includes information relating to quantized MDCT coefficients for the low-band, and side information including high frequency reconstruction parameters. The bitstream is received by a demuxer 211, and the low-band information is decoded by a decoder 212, to recreate the actual quantized MDCT coefficients. Compared to the example in figure 1, where the decoder 12 also transformed the samples to the QMF domain, the decoder 212 only needs to perform the decoding of the MDCT waveforms. The decoder 212 can therefore be referred to as a waveform decoder.

The MDCT coefficients are provided to generative model formed by a first neural network system 213, trained to reconstruct a set of MDCT coefficients for the low-band having higher resolution. The generative model 213 may be a MDCT Predictor as described in PCT/US2021/054617. The generated (predicted) MDCT coefficients are then supplied to an inverse MDCT transform 214, followed by a QMF analysis filter bank 215, to generate low-band QMF samples $x_k^{LF}$,

The remaining blocks in figure 6 are a second neural network system 216 and a QMF synthesis filter bank 217. The second neural network system 216 may be equivalent to the generative model 13 in figure 1, and may been trained in a similar manner.

Similar to the decoder system 10 in figure 1, an inverse flattening unit 218 may be provided preceding the synthesis filter bank 217, in the case where the second neural network system 216 is trained to predict flattened samples.

Unless specifically stated otherwise, as apparent from the following discussions, it is appreciated that throughout the disclosure discussions utilizing terms such as "processing", "computing", "calculating", "determining", "analyzing" or the like, refer to the action and/or processes of a computer hardware or computing system, or similar electronic computing devices, that manipulate and/or transform data represented as physical, such as electronic, quantities into other data similarly represented as physical quantities.

It should be appreciated that in the above description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the Detailed Description are hereby expressly incorporated into this Detailed Description, with each claim standing on its own as a separate embodiment of this invention. Furthermore, while some embodiments described herein include some but not other features included in other embodiments, combinations of features of different embodiments are possible, and form different embodiments, as would be understood by those skilled in the art.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Note that when the method includes several elements, e.g., several steps, no ordering of such elements is implied, unless specifically stated. Furthermore, an element described herein of an apparatus embodiment is an example of a means for carrying out the function performed by the element for the purpose of carrying out the invention. In the description provided herein, numerous specific details are set forth. However, it is understood that embodiments of the invention may be practiced without these specific details. In other instances, well-known methods, structures and techniques have not been shown in detail in order not to obscure an understanding of this description.

The person skilled in the art realizes that the present invention by no means is limited to the specific embodiments described above. On the contrary, many modifications and variations are possible within the scope of the appended claims. For example, as mentioned, other filter bank domains may be used.

**Claims**

1. A method for reconstructing an audio signal, comprising:

   receiving a bitstream including an encoded low-band audio signal representation and a set of high frequency reconstruction, HFR, parameters;
   decoding the encoded low-band audio signal representation to provide a low-band audio signal in a filter bank domain;
   reconstructing a filter bank domain high-band audio signal using a neural network system trained to predict samples of the high-band audio signal in the filter bank domain given samples of the filter bank domain low-band signal and said HFR parameters, the neural network system being configured to autoregressively generate a current sample ($x_m$) for a current time slot ($m$) of the filter bank domain high-band signal, the current sample including a plurality of values, each corresponding to a channel of the filter bank, the system comprising:

> a processing layer, trained to generate conditioning information for the current sample based on quantized samples of the filter bank domain low-band signal and said HFR parameters, and
> an output layer subdivided into a plurality of sequentially executed sub-layers, each sub-layer being trained to generate a subset of values of the current sample, given the conditioning information from the processing layer and on samples generated by any previously executed sub-layers;

> and
> synthesizing a time domain output audio signal from the filter bank domain low-band signal and the reconstructed filter bank domain high-band signal.

2. The method according to claim 1, wherein the neural network system is trained to predict filter bank domain high-band samples with reduced signal dynamics, and wherein the method further comprises increasing dynamics of the reconstructed filter bank domain high-band signal.

3. The method according to claim 2, further comprising envelope adjusting the reconstructed filter bank domain high-band signal using envelope data in the HFR parameters.

4. The method according to any of claims 1-3, wherein the filter bank domain low-band signal is compressed in the encoding process, and wherein the method further comprises expanding the filter bank domain low-band signal before synthesizing.

5. The method according to any of claims 1-4, further comprising:

> reconstructing an improved filter bank domain low-band audio signal using a neural network system trained to predict samples of the low-band signal in a filter bank domain given decoded samples of the filter bank domain low-band signal;

wherein the synthesizing is based on the reconstructed filter bank domain low-band signal and the reconstructed filter bank domain high-band signal.

6. The method according to any of claims 1-5, further comprising:
reconstructing the low-band audio signal representation using a neural network system trained to predict low-band filter bank domain samples given quantized filter bank domain coefficients.

7. The method according to claim 6, wherein the neural network system used for reconstructing the low-band audio signal representation operates in a first filter bank domain, and the neural network system used for reconstructing the filter bank domain high-band audio signal operates in a second filter bank domain.

8. The method according to claim 7, wherein the first filter bank domain is the MDCT domain, and the second filter bank domain is the QMF domain.

9. A decoder system comprising:

> a demuxer for separating a bitstream into an encoded low-band audio signal representation and a set of high frequency reconstruction, HFR, parameters;
> a decoder for decoding the encoded low-band audio signal representation to provide a low-band audio signal in a filter bank domain;
> a generative model for reconstructing a filter bank domain high-band signal using a neural network system trained to predict samples of a high-band audio signal in the filter bank domain given samples of the filter bank domain low-band signal and said HFR parameters; the neural network system being configured to autoregressively generate a current sample ($x_m$) for a current time slot ($m$) of the filter bank domain high-band signal, the current sample including a plurality of values, each corresponding to a channel of the filter bank, the system comprising:

> > a processing layer, trained to generate conditioning information for the current sample based on quantized samples of the filter bank domain low-band signal and said HFR parameters, and
> > an output layer subdivided into a plurality of sequentially executed sub-layers, each sub-layer being trained to generate a subset of values of the current sample, given the conditioning information from the processing layer and on samples generated by any previously executed sub-layers;

and

a synthesis filter bank for synthesizing a time domain audio signal from the filter bank domain low-band signal and the reconstructed filter bank domain high-band signal.

10. The decoder system according to claim 9, wherein the neural network system is also trained to predict samples of the low-band signal in a filter bank domain given the decoded samples of the filter bank domain low-band signal;
wherein the synthesizing is based on the predicted filter bank domain low-band signal and the reconstructed filter bank domain high-band signal.

11. The decoder system according to claim 10, wherein the neural network system comprises two submodels:

a first submodel trained to predict samples of the low-band signal in the filter bank domain given decoded samples of the filter bank domain low-band signal, and
a second submodel trained to predict samples of the high-band signal in the filter bank domain given the predicted samples of the filter bank domain low-band signal and said HFR parameters.

12. The decoder system according to claim 11, wherein the first submodel operates in a first filter bank domain, and the second submodel operates in a second filter bank domain.

13. The decoder system according to claim 12, wherein the first filter bank domain is the MDCT domain, and the second filter bank domain is the QMF domain.

14. A computer program product comprising computer program code portions configured to perform the method according to one of claims 1 - 8 when executed on a computer processor.

**Patentansprüche**

1. Verfahren zum Rekonstruieren eines Audiosignals, umfassend:

Empfangen eines Bitstroms, der eine codierte Tiefband-Audiosignaldarstellung und einen Satz Hochfrequenzrekonstruktions-, HFR-, Parameter einschließt;
Decodieren der codierten Tiefband-Audiosignaldarstellung, um ein Tiefband-Audiosignal in einem Filterbankbereich bereitzustellen;
Rekonstruieren eines Filterbankbereichs-Hochband-Audiosignals unter Verwendung eines neuronalen Netzwerksystems, das darauf trainiert ist, Abtastwerte des Hochband-Audiosignals in dem Filterbankbereich anhand von Abtastwerten des Filterbankbereichs-Tiefbandsignals und der HFR-Parameter vorherzusagen, wobei das neuronale Netzwerksystem so konfiguriert ist, dass es autoregressiv einen aktuellen Abtastwert (xm) für einen aktuellen Zeitschlitz (m) des Filterbankbereichs-Hochbandsignals erzeugt, wobei der aktuelle Abtastwert eine Vielzahl von Werten einschließt, die jeweils einem Kanal der Filterbank entsprechen, wobei das System umfasst:

eine Verarbeitungsschicht, die darauf trainiert ist, Konditionierungsinformationen für den aktuellen Abtastwert auf Basis von quantisierten Abtastwerten des Filterbankbereichs-Tiefbandsignals und der HFR-Parameter zu erzeugen, und
eine Ausgangsschicht, die in eine Vielzahl von sequenziell ausgeführten Teilschichten unterteilt ist, wobei jede Teilschicht darauf trainiert ist, eine Teilmenge von Werten des aktuellen Abtastwertes anhand der Konditionierungsinformationen aus der Verarbeitungsschicht und von Abtastwerten, die von zuvor ausgeführten Teilschichten erzeugt wurden, zu erzeugen;
und
Synthetisieren eines Zeitbereichs-Audioausgangssignals aus dem Filterbankbereichs-Tiefbandsignal und dem rekonstruierten Filterbankbereichs-Hochbandsignal.

2. Verfahren nach Anspruch 1, wobei das neuronale Netzwerksystem darauf trainiert ist, Filterbankbereichs-Hochbandabtastwerte mit reduzierten Signaldynamiken vorherzusagen, und wobei das Verfahren weiter das Erhöhen von Dynamiken des rekonstruierten Filterbankbereichs-Hochbandsignals umfasst.

3. Verfahren nach Anspruch 2, das weiter die Hüllkurvenanpassung des rekonstruierten Filterbankbereichs-Hochbandsignals unter Verwendung von Hüllkurvendaten in den HFR-Parametern umfasst.

4. Verfahren nach einem der Ansprüche 1-3, wobei das Filterbankbereichs-Tiefbandsignal in dem Codierungsprozess komprimiert wird, und wobei das Verfahren weiter das Aufweiten des Filterbankbereichs-Tiefbandsignals vor dem Synthetisieren umfasst.

**5.** Verfahren nach einem der Ansprüche 1-4, weiter umfassend:

Rekonstruieren eines verbesserten Filterbankbereichs-Tiefband-Audiosignals unter Verwendung eines neuronalen Netzwerksystems, das darauf trainiert ist, Abtastwerte des Tiefbandsignals in einem Filterbankbereich anhand von decodierten Abtastwerten des Filterbankbereichs-Tiefbandsignals vorherzusagen;
wobei das Synthetisieren auf dem rekonstruierten Filterbankbereichs-Tiefbandsignal und dem rekonstruierten Filterbankbereichs-Hochbandsignal basiert.

**6.** Verfahren nach einem der Ansprüche 1-5, weiter umfassend:
Rekonstruieren der Tiefband-Audiosignaldarstellung unter Verwendung eines neuronalen Netzwerksystems, das darauf trainiert ist, Tiefband-Filterbankbereichs-Abtastwerte anhand von quantisierten Filterbankbereichskoeffizienten vorherzusagen.

**7.** Verfahren nach Anspruch 6, wobei das zum Rekonstruieren der Tiefband-Audiosignaldarstellung verwendete neuronale Netzwerksystem in einem ersten Filterbankbereich arbeitet, und das zum Rekonstruieren des Filterbankbereichs-Hochband-Audiosignals verwendete neuronale Netzwerksystem in einem zweiten Filterbankbereich arbeitet.

**8.** Verfahren nach Anspruch 7, wobei der erste Filterbankbereich der MDCT-Bereich ist, und der zweite Filterbankbereich der QMF-Bereich ist.

**9.** Decodersystem, umfassend:

einen Demuxer zum Trennen eines Bitstroms in eine codierte Tiefband-Audiosignaldarstellung und einen Menge Hochfrequenzrekonstruktions-, HFR-, Parametern;
einen Decoder zum Decodieren der codierten Tiefband-Audiosignaldarstellung, um ein Tiefband-Audiosignal in einem Filterbankbereich bereitzustellen;
ein generatives Modell zum Rekonstruieren eines Filterbankbereichs-Hochbandsignals unter Verwendung eines neuronalen Netzwerksystems, das darauf trainiert ist, Abtastwerte eines Hochband-Audiosignals in dem Filterbankbereich anhand von Abtastwerten des Filterbankbereichs-Tiefbandsignals und der HFR-Parameter vorherzusagen; wobei das neuronale Netzwerksystem so konfiguriert ist, dass es autoregressiv einen aktuellen Abtastwert ($x_m$) für einen aktuellen Zeitschlitz (m) des Filterbankbereichs-Hochbandsignals erzeugt, wobei der aktuelle Abtastwert eine Vielzahl von Werten einschließt, die jeweils einem Kanal der Filterbank entsprechen, wobei das System umfasst:

eine Verarbeitungsschicht, die darauf trainiert ist, Konditionierungsinformationen für den aktuellen Abtastwert auf Basis von quantisierten Abtastwerten des Filterbankbereichs-Tiefbandsignals und der HFR-Parameter zu erzeugen, und
eine Ausgangsschicht, die in eine Vielzahl von sequenziell ausgeführten Teilschichten unterteilt ist, wobei jede Teilschicht darauf trainiert ist, eine Teilmenge von Werten des aktuellen Abtastwertes anhand der Konditionierungsinformationen aus der Verarbeitungsschicht und von Abtastwerten, die von zuvor ausgeführten Teilschichten erzeugt wurden, zu erzeugen; und
eine Synthesefilterbank zum Synthetisieren eines Zeitbereichs-Audiosignals aus dem Filterbankbereichs-Tiefbandsignal und dem rekonstruierten Filterbankbereichs-Hochbandsignal.

**10.** Decodersystem nach Anspruch 9, wobei das neuronale Netzwerksystem auch darauf trainiert ist, Abtastwerte des Tiefbandsignals in einem Filterbankbereich anhand der decodierten Abtastwerte des Filterbankbereichs-Tiefbandsignals vorherzusagen;
wobei das Synthetisieren auf dem vorhergesagten Filterbankbereichs-Tiefbandsignal und dem rekonstruierten Filterbankbereichs-Hochbandsignal basiert.

**11.** Decodersystem nach Anspruch 10, wobei das neuronale Netzwerksystem zwei Teilmodelle umfasst:

ein erstes Teilmodell, das darauf trainiert ist, Abtastwerte des Tiefbandsignals in dem Filterbankbereich anhand von decodierten Abtastwerten des Filterbankbereichs-Tiefbandsignals vorherzusagen, und
ein zweites Teilmodell, das darauf trainiert ist, Abtastwerte des Hochbandsignals in dem Filterbankbereich anhand der vorhergesagten Abtastwerte des Filterbankbereichs-Tiefbandsignals und der HFR-Parameter vorherzusagen.

**12.** Decodersystem nach Anspruch 11, wobei das erste Teilmodell in einem ersten Filterbankbereich arbeitet, und das zweite Teilmodell in einem zweiten Filterbankbereich arbeitet.

**13.** Decodersystem nach Anspruch 12, wobei der erste Filterbankbereich der MDCT-Bereich ist, und der zweite Filterbankbereich der QMF-Bereich ist.

**14.** Computerprogrammprodukt, das Computerprogrammcodeabschnitte umfasst, die so konfiguriert sind, dass sie, wenn sie auf einem Computerprozessor ausgeführt werden, das Verfahren nach einem der Ansprüche 1-8 durchführen.

## Revendications

**1.** Procédé de reconstruction d'un signal audio, comprenant :

la réception d'un flux binaire incluant une représentation de signal audio basse bande codée et un ensemble de paramètres de reconstruction haute fréquence, HFR ;
le décodage de la représentation de signal audio basse bande codé pour fournir un signal audio basse bande dans un domaine de banc de filtres ;
la reconstruction d'un signal audio haute bande de domaine de banc de filtres en utilisant un système de réseau neuronal entraîné à prédire des échantillons du signal audio haute bande dans le domaine de banc de filtres, étant donné des échantillons du signal basse bande de domaine de banc de filtres et desdits paramètres HFR, le système de réseau neuronal étant configuré pour générer de manière autorégressive un échantillon courant ($x_m$) pour un intervalle de temps courant ($m$) du signal haute bande de domaine de banc de filtres, l'échantillon courant incluant une pluralité de valeurs, chacune correspondant à un canal du banc de filtres, le système comprenant :

une couche de traitement, entraînée à générer des informations de conditionnement pour l'échantillon courant sur la base d'échantillons quantifiés du signal basse bande de domaine de banc de filtres et desdits paramètres HFR, et
une couche de sortie subdivisée en une pluralité de sous-couches exécutées séquentiellement, chaque sous-couche étant entraînée à générer un sous-ensemble de valeurs de l'échantillon courant, étant donné les informations de conditionnement de la couche de traitement et sur des échantillons générés par toutes les sous-couches exécutées précédemment ; et
la synthèse d'un signal audio de sortie de domaine temporel à partir du signal basse bande de domaine de banc de filtres et du signal haute bande de domaine de banc de filtres reconstruit.

**2.** Procédé selon la revendication 1, dans lequel le système de réseau neuronal est entraîné à prédire des échantillons de bande haute de domaine de banc de filtres avec une dynamique de signal réduite, et dans lequel le procédé comprend en outre une augmentation de la dynamique du signal de bande haute de domaine de banc de filtres reconstruit.

**3.** Procédé selon la revendication 2, comprenant en outre l'ajustement d'enveloppe du signal haute bande de domaine de banc de filtres reconstruit à l'aide des données d'enveloppe dans les paramètres HFR.

**4.** Procédé selon l'une quelconque des revendications 1-3, dans lequel le signal de bande basse de domaine de banc de filtres est compressé dans le processus de codage, et dans lequel le procédé comprend en outre l'expansion du signal de bande basse de domaine de banc de filtres avant la synthèse.

**5.** Procédé selon l'une quelconque des revendications 1-4, comprenant en outre :

la reconstruction d'un signal audio basse bande amélioré de domaine de banc de filtres à l'aide d'un système de réseau neuronal entraîné à prédire des échantillons du signal basse bande dans un domaine de banc de filtres étant donné des échantillons décodés du signal basse bande de domaine de banc de filtres ;
dans lequel la synthèse est basée sur le signal basse bande de domaine de banc de filtres reconstruit et le signal haute bande de domaine de banc de filtres reconstruit.

**6.** Procédé selon l'une quelconque des revendications 1-5, comprenant en outre :
la reconstruction de la représentation de signal audio basse bande à l'aide d'un système de réseau neuronal entraîné à prédire des échantillons de domaine de banc de filtres basse bande étant donné des coefficients quantifiés de domaine de banc de filtres.

**7.** Procédé selon la revendication 6, dans lequel le système de réseau neuronal utilisé pour reconstruire la représentation de signal audio basse bande fonctionne dans un premier domaine de banc de filtres, et le système de réseau neuronal utilisé pour reconstruire le signal audio haute bande de domaine de banc de filtres fonctionne dans un second domaine de banc de filtres.

**8.** Procédé selon la revendication 7, dans lequel le premier domaine de banc de filtres est le domaine MDCT et le second domaine de banc de filtres est le domaine QMF.

9. Système de décodeur comprenant :

un démultiplexeur pour la séparation d'un flux binaire en une représentation de signal audio basse bande codée et un ensemble de paramètres de reconstruction haute fréquence, HFR ;
un décodeur pour le décodage de la représentation de signal audio basse bande codée afin de fournir un signal audio basse bande dans un domaine de banc de filtres ;
un modèle génératif pour la reconstruction d'un signal haute bande de domaine de banc de filtres en utilisant un système de réseau neuronal entraîné à prédire des échantillons d'un signal audio haute bande de domaine de banc de filtres, étant donné des échantillons du signal basse bande de domaine de banc de filtres et lesdits paramètres HFR ; le système de réseau neuronal étant configuré pour générer de manière autorégressive un échantillon courant ($x_m$) pour un intervalle de temps courant (m) du signal haute bande de domaine de banc de filtres, l'échantillon courant comprenant une pluralité de valeurs, chacune correspondant à un canal du banc de filtres, le système comprenant :

une couche de traitement, entraînée à générer des informations de conditionnement pour l'échantillon courant sur la base d'échantillons quantifiés du signal basse bande de domaine de banc de filtres et desdits paramètres HFR, et
une couche de sortie subdivisée en une pluralité de sous-couches exécutées séquentiellement, chaque sous-couche étant entraînée à générer un sous-ensemble de valeurs de l'échantillon courant, étant donné les informations de conditionnement de la couche de traitement et sur des échantillons générés par toutes les sous-couches exécutées précédemment ; et
un banc de filtres pour la synthèse d'un signal audio de domaine temporel à partir du signal basse bande de domaine de banc de filtres et du signal haute bande de domaine de banc de filtres reconstruit.

10. Système de décodeur selon la revendication 9, dans lequel le système de réseau neuronal est également entraîné à prédire des échantillons du signal basse bande dans un domaine de banc de filtres, étant donné les échantillons décodés du signal basse bande de domaine de banc de filtres ;
dans lequel la synthèse est basée sur le signal basse bande de domaine de banc de filtres prédit et sur le signal haute bande de domaine de banc de filtres reconstruit.

11. Système de décodeur selon la revendication 10, dans lequel le système de réseau neuronal comprend deux sous-modèles :

un premier sous-modèle entraîné à prédire des échantillons du signal basse bande dans le domaine de banc de filtres étant donné des échantillons décodés du signal basse bande de domaine de banc de filtres, et
un second sous-modèle entraîné à prédire des échantillons du signal haute bande dans le domaine de banc de filtres, étant donné les échantillons prédits du signal basse bande de domaine de banc de filtres et lesdits paramètres HFR.

12. Système de décodeur selon la revendication 11, dans lequel le premier sous-modèle fonctionne dans un premier domaine de banc de filtres, et le second sous-modèle fonctionne dans un second domaine de banc de filtres.

13. Système de décodeur selon la revendication 12, dans lequel le premier domaine de banc de filtres est le domaine MDCT et le second domaine de banc de filtres est le domaine QMF.

14. Produit de programme informatique comprenant des parties de code de programme informatique configurées pour réaliser le procédé selon l'une des revendications 1-8 lorsqu'elles sont exécutées sur un processeur informatique.

FIG. 1

FIG. 2

FIG. 3

FIG. 4

FIG. 5

FIG. 6

EP 4 508 637 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63331056
- EP 22168469
- EP 2021078652 W
- US 2021054617 W

**Non-patent literature cited in the description**

- **HUANG QINGBO et al.** Bandwidth Extension Method Based on Generative Adversarial Nets for Audio Compression. *AES CONVENTION 144*, 14 May 2018, 10165-2520